# EUROPEAN PATENT SPECIFICATION

(11) **EP 3 056 408 B1**
(45) Date of publication and mention of the grant of the patent: **28.03.2018**
(21) Application number: 16154706.2
(22) Date of filing: 08.02.2016
(51) Int. Cl.: B62D 3/12

(54) **STEERING SYSTEM AND RACK SHAFT USED FOR THE STEERING SYSTEM**
LENKSYSTEM UND ZAHNSTANGENWELLE ZUR VERWENDUNG MIT DEM LENKSYSTEM
SYSTÈME DE DIRECTION ET ARBRE À CRÉMAILLÈRE UTILISÉE POUR CELUI-CI

(30) Priority: 12.02.2015 JP 2015025362
(43) Date of publication of application: 17.08.2016
(73) Proprietor: JTEKT Corporation, Chuo-ku, Osaka-shi Osaka 542-8502 (JP)
(72) Inventor: MITSUI, Kuniaki, Osaka-shi, Osaka, 542-8502 (JP)
(74) Representative: Winter, Brandl, Fürniss, Hübner, Röss, Kaiser, Polte - Partnerschaft mbB

(56) References cited:
- JP-A- 2005 271 605
- JP-A- 2006 096 243
- JP-A- 2008 137 473
- JP-A- 2009 040 277
- JP-A- 2009 107 539
- JP-A- 2010 111 301

## Description

### BACKGROUND OF THE INVENTION

The present invention relates to a steering system and a rack shaft used for the steering system.

Japanese Patent Application Publication No. 2008-137473 (JP 2008-137473 A) discloses that, upon reaching a stroke end, a rack comes into abutting contact with a stopper fixed to a housing and stops and dedenda of rack teeth meshed with pinion teeth are rounded so as to have a large radius of curvature. Japanese Patent Application Publication No. 2009-107539 (JP 2009-107539 A) discloses a rack shaft on which a bottom land with a large radius of curvature is formed at dedendum of the rack tooth at a stroke end position.

Japanese Patent Application Publication No. 2006-96243 (JP 2006-96243 A) discloses that a rack tooth located at an endmost position of a rack tooth row formed on a rack shaft has a tooth profile with a shallower groove than tooth profiles of the rack teeth at positions other than the endmost position. Japanese Patent Application Publication No. 2010-111301 (JP 2010-111301 A) discloses a rack shaft on which the rack teeth meshing with the pinion teeth at a stroke end has a reduced tooth depth.

In JP 2008-137473 A, JP 2009-107539 A, JP 2009-96243 A, and JP 2010-111301 A, when the rack shaft collides against the stopper at the stroke end position, the dedendum stress of the rack teeth is equal to the dedendum stress based on meshing transmission plus dedendum stress caused by the collision. When the stroke position where the dedendum stress based on the meshing transmission reaches a peak coincides with the stroke end position, a high dedendum stress may be generated at the stroke end position.

From document JP 2009-040277 A a rack for a steering device with the features of the preamble of claim 1 has become known.

### SUMMARY OF THE INVENTION

An object of the present invention is to provide a steering system that enables suppression of an increase in dedendum stress at a stroke end position of a rack shaft.

A steering system in an aspect of the present invention includes a pinion shaft with pinion teeth formed thereon, a rack shaft with rack teeth formed thereon and meshing with the pinion teeth, and a pair of stoppers that regulates movement of the rack shaft at right and left stroke end positions of the rack shaft. The rack teeth are formed such that the rack teeth on a first end side of the rack shaft and the rack teeth on a second end side of the rack shaft are asymmetric with respect to a reference position, the reference position being an area of the rack teeth, in which the rack teeth mesh with the pinion teeth in a steering neutral state. In regard to a stroke position of the rack shaft, the stroke end positions are each offset from a peak generation stroke position where a dedendum stress of the rack teeth based on meshing transmission via the pinion teeth reaches a peak.

### BRIEF DESCRIPTION OF THE DRAWINGS

The foregoing and further features and advantages of the present invention will become apparent from the following description of example embodiments with reference to the accompanying drawings, wherein like numerals are used to represent like elements and wherein:
FIG. 1 is a schematic front view of a steering system in an embodiment of the present invention;
FIG. 2 is a graph illustrating a stroke ratio of a steering operation mechanism from a neutral position to a stroke end position; and
FIG. 3 is a graph depicting a dedendum stress curve that represents a change in the dedendum stress of rack teeth 8a with respect to a rotation angle θ of a pinion shaft.

### DETAILED DESCRIPTION OF EMBODIMENTS

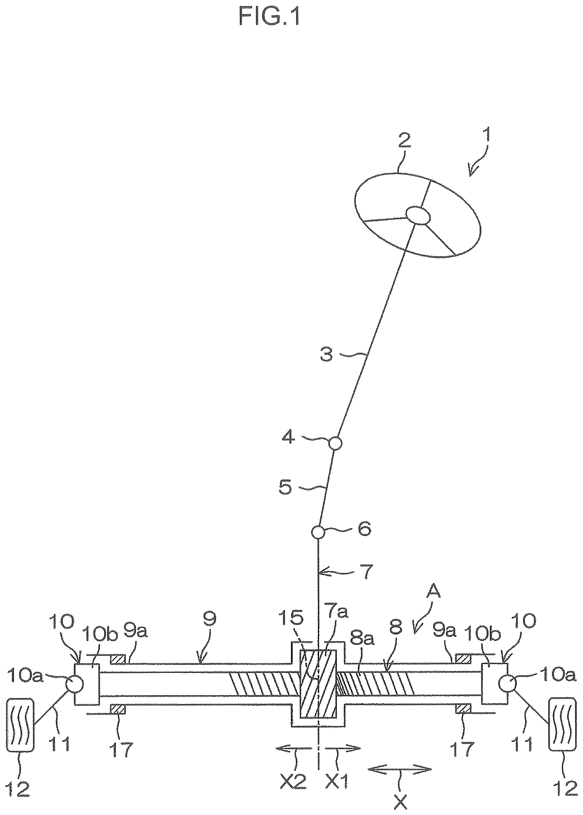

An embodiment of the present invention will be described below with reference to the attached drawings. FIG. 1 is a schematic front view of a steering system 1 in the embodiment of the present invention. The steering system 1 includes a steering shaft 3 and an intermediate shaft 5. A steering member 2 such as a steering wheel is coupled to an end of the steering shaft 3. The intermediate shaft 5 is coupled to a steering shaft 3 via a universal joint 4. The steering system 1 includes a pinion shaft 7 and a rack shaft 8. One end of the pinion shaft 7 is coupled to the intermediate shaft 5 via the universal joint 6. Pinion teeth 7a are formed at the other end of the pinion shaft 7. The rack shaft 8 has rack teeth 8a meshing with the pinion teeth 7a. The pinion shaft 7 and the rack shaft 8 form a steering operation mechanism A that is a rack-and-pinion mechanism.

The rack shaft 8 is a rod extending in a width direction (lateral direction) of a vehicle. The rack shaft 8 is supported in a tubular housing 9 via a bush or the like not depicted in the drawings so as to be movable in an axial direction X of the housing 9. An internal space in the housing 9 is increased in diameter at opposite ends of the housing 9 in the axial direction X to form steps 9a at opposite ends of the housing 9 in the axial direction X.

Opposite ends of the rack shaft 8 in the axial direction X protrude from the housing 9. The opposite ends of the rack shaft 8 are coupled to steered wheels 12 via a pair of joint members 10 such as ball joints, corresponding tie rods 11, and the like. Each of the joint members 10 includes a ball portion 10a and a socket 10b. The ball portion 10a is formed at an end of the tie rod 11. The socket 10b is formed at the end of the rack shaft 8 to hold the ball portion 10a such that the ball portion 10a is rollable.

Rotation of the steering member 2 is transmitted to the pinion shaft 7 via the steering shaft 3 and the intermediate shaft 5 so that the pinion shaft 7 rotates. The rotation transmitted to the pinion shaft 7 is converted into movement of the rack shaft 8 in the axial direction X via meshing between the pinion teeth 7a and the rack teeth 8a. Movement of the rack shaft 8 in the axial direction X allows the steered wheels 12 to be steered. The position of the steering member 2 corresponding to the position of the steered wheels 12 obtained while the vehicle is traveling straight ahead is hereinafter referred to as a steering neutral position. The state of the steering system 1 established when the steering member 2 is at the steering neutral position is hereinafter referred to as a steering neutral state. An area 15 of the rack teeth 8a meshing with the pinion teeth 7a in the steering neutral state is hereinafter referred to as a reference position (long dashed short dashed line in FIG. 1). The position of the rack shaft 8 in the axial direction X is hereinafter referred to as a stroke position. The position of the rack shaft 8 in the steering neutral state is hereinafter referred to as a neutral position.

The steering system 1 includes a pair of stoppers 17 fitted to and held by an inner periphery of the housing 9 to regulate movement of the rack shaft 8 in the axial direction X. For each of the stoppers 17, movement in the axial direction X is regulated by the corresponding step 9a of the housing 9. Each of the stoppers 17 faces the corresponding socket 10b in the axial direction X. Each of the stoppers 17 comes into abutting contact with the corresponding socket 10b to regulate the rack shaft 8 to the stroke end position.

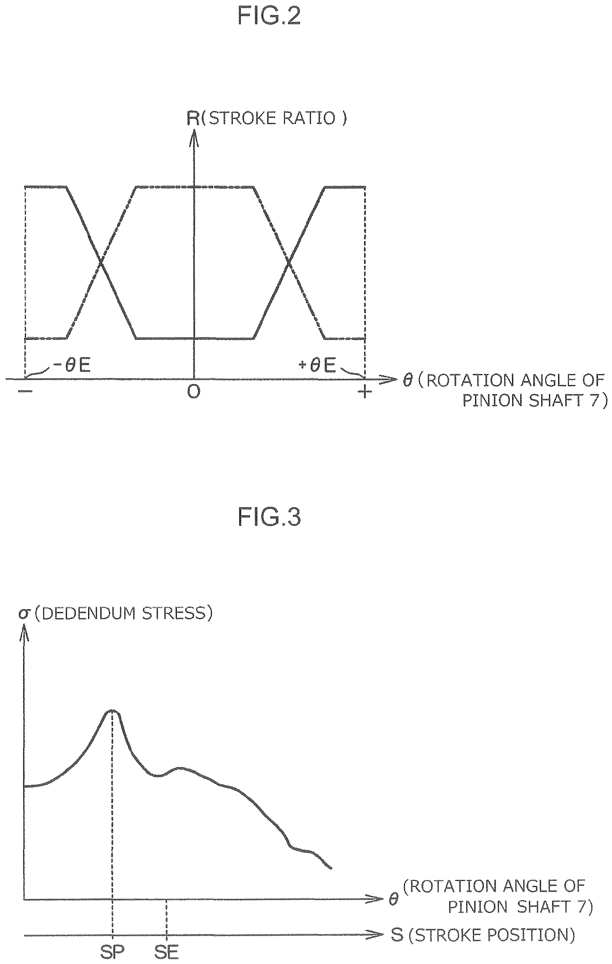

The rack teeth 8a forms a so-called variable rack in which a rack-and-pinion mechanism (steering operation mechanism A) has a gear ratio changing in accordance with a steering angle of the steering member 2. The rack teeth 8a are formed such that the teeth on a first end side X1 of the rack shaft 8 and the teeth on a second end side X2 of the rack shaft 8 are asymmetric with respect to the reference position. FIG. 2 is a graph illustrating a stroke ratio R of the steering operation mechanism A from the neutral position to the stroke end position. The stroke ratio R is the moving distance of the rack shaft 8 in the axial direction with respect to the rotation angle θ of the pinion shaft 7.

The axis of abscissas in FIG. 2 represents the rotation angle θ of the pinion shaft 7. In this case, the neutral position corresponds to θ = 0. Rotation of the pinion shaft 7 performed when the stroke position is located on the first end side X1 (right side in FIG. 1) with respect to the neutral position is represented as "+". Rotation of the pinion shaft 7 performed when the stroke position is located on the second end side X2 (left side in FIG. 1) with respect to the neutral position is represented as "-". The rotation angles of the pinion shaft 7 at the stroke end positions are represented as "+θE" and "-θE". An axis of ordinate in FIG. 2 indicates the stroke ratio R.

In the present embodiment, the stroke ratio R is set to be low around θ = 0 (neutral position) as in a graph depicted by a continuous line in FIG. 2. The stroke ratio R is set to be high around θ = +θE and θ = -θE (stroke end positions). Unlike in the present embodiment, the stroke ratio R may be set to be high around θ =0 (neutral position) and to be low around θ = +θE and θ = -θE (stroke end positions) as depicted by a long dashed double-short dashed line.

In the rack shaft of the variable rack, the rack teeth are shaped such that the rack teeth on the first end side X1 and the rack teeth on the second end side X2 of the rack shaft are symmetric with respect to the reference position. Normally, a curve indicating the stroke ratio is laterally symmetric with respect to a line of θ = 0. In the present embodiment, the rack teeth 8a are formed such that the rack teeth on the first end side X1 of the rack shaft 8 and the rack teeth on the second end side X2 of the rack shaft 8 are asymmetric. On the other hand, the tooth profile of the rack teeth 8a is computationally designed such that the stroke ratio R for the rack shaft 8 in the present embodiment is laterally symmetric with respect to the line of θ = 0.

FIG. 3 is a graph depicting a dedendum stress curve that is a change curve for the dedendum stress of the rack teeth 8a with respect to the rotation angle θ of the pinion shaft 7. One axis of abscissas of the graph depicted in FIG. 3 indicates the rotation angle θ of the pinion shaft 7. The other axis of abscissas indicates a stroke position S of the rack shaft 8 near the stroke end position SE corresponding to the rotation angle θ. An axis of ordinate depicted in FIG. 3 indicates the dedendum stress σ based on the meshing transmission via one rack tooth 8a meshing with the pinion teeth 7a.

In regard to the stroke position S of the rack shaft 8, the stroke end position SE is offset from a peak generation stroke position SP where the dedendum stress σ of the rack teeth 8a based on the meshing transmission via the pinion teeth 7a reaches a peak, as depicted in FIG. 3. Thus, the stroke end position SE does not coincide with the peak generation stroke position SP where the dedendum stress σ of the rack teeth 8a based on the meshing transmission reaches a peak. This avoids addition of the dedendum stress caused by collision between the rack shaft 8 and the stopper 17 to the peak of the dedendum stress σ based on the meshing transmission. Therefore, an increase in the dedendum stress σ of the rack teeth 8a at the stroke end position SE can be suppressed.

The present invention is not limited to the above-described embodiment, but various changes may be made to the embodiment within the scope of the claims.

## Claims

1. A steering system comprising:
a pinion shaft (7) with pinion teeth (7a) formed thereon;
a rack shaft (8) with rack teeth (8a) formed thereon and meshing with the pinion teeth (7a); and
a pair of stoppers (17) that regulates movement of the rack shaft (8) at right and left stroke end positions (SE) of the rack shaft (8), **characterized in that**
the rack teeth (8a) are formed such that the rack teeth (8a) on a first end side (X1) of the rack shaft (8) and the rack teeth (8a) on a second end side (X2) of the rack shaft (8) are asymmetric with respect to a reference position, the reference position being an area (15) of the rack teeth (8a), in which the rack teeth (8a) mesh with the pinion teeth (7a) in a steering neutral state, and
in regard to a stroke position of the rack shaft (8), the stroke end positions (SE) are each offset from a peak generation stroke position (SP) where a dedendum stress of the rack teeth (8a) based on meshing transmission via the pinion teeth (7a) reaches a peak.

## Patentansprüche

1. Lenksystem mit:
einer Ritzelwelle (7), die darauf gebildete Ritzelzähne (7a) aufweist;
einer Zahnstange (8), die darauf gebildete Zahnstangenzähne (8a) aufweist und mit den Ritzelzähnen (7a) in Eingriff steht; und
einem Paar von Stoppern (17), das eine Bewegung der Zahnstange (8) an rechten und linken Hubendlagen (SE) der Zahnstange (8) reguliert, **dadurch gekennzeichnet, dass**
die Zahnstangenzähne (8a) derart gebildet sind, dass die Zahnstangenzähne (8a) an einer ersten Endseite (X1) der Zahnstange (8) und die Zahnstangenzähne (8a) an einer zweiten Endseite (X2) der Zahnstange (8) in Bezug auf eine Referenzposition asymmetrisch sind, wobei die Referenzposition ein Bereich (15) der Zahnstangenzähne (8a) ist, in dem die Zahnstangenzähne (8a) mit den Ritzelzähnen (7a) in einer Lenkungsneutralzustand in Eingriff stehen, und
in Bezug auf eine Hublage der Zahnstange (8), die Hubendlagen (SE) jeweils von einer Spitzenwerterzeugungshublage (SP) versetzt sind, an der eine Zahnfußbelastung der Zahnstangenzähne (8a) basierend auf eine Eingriffsübertragung über die Ritzelzähne (7a) einen Spitzenwert erreicht.

## Revendications

1. Système de direction comprenant :
un arbre de pignon (7) avec des dents de pignon (7a) formées dessus ;
un arbre de crémaillère (8) avec des dents de crémaillère (8a) formées dessus et coopérant avec les dents de pignon (7a) ; et
une paire d'éléments d'arrêt (17) qui régulent le mouvement de l'arbre de crémaillère (8) en des positions d'extrémité de course (SE) gauche et droite de l'arbre de crémaillère (8), **caractérisé en ce que**
les dents de crémaillère (8a) sont formées de telle manière que les dents de crémaillère (8a) sur un premier côté d'extrémité (X1) de l'arbre de crémaillère (8) et les dents de crémaillère (8a) sur un second côté d'extrémité (X2) de l'arbre de crémaillère (8) sont asymétriques par rapport à une position de référence, la position de référence étant une zone (15) des dents de crémaillère (8a), dans laquelle les dents de crémaillère (8a) coopèrent avec les dents de pignon (7a) dans un état de direction neutre, et
relativement à une position de course de l'arbre de crémaillère (8), les positions d'extrémité de course (SE) sont chacune décalée d'une position de course de génération de pic (SP) où une contrainte de pied de dent des dents de crémaillère (8a) en fonction de la transmission par coopération avec les dents de pignon (7a) atteint un pic.
